# EUROPEAN PATENT APPLICATION

(11) **EP 1 018 742 A2**
(43) Date of publication of application: **12.07.2000**
(21) Application number: 99200973.8
(22) Date of filing: 31.03.1999
(51) Int. Cl.: G11B 27/028, G11B 27/031, G11B 5/86, G11B 31/00, H04H 1/00

(54) **Integrated dubbing system for use in a car**

(30) Priority: 22.06.1998 US 135504
(71) Applicant: Igbinadolor, Phillip, Rosedale, NY 11422 (US)
(72) Inventor: Igbinadolor, Phillip, Rosedale, NY 11422 (US)
(74) Representative: Lips, Hendrik Jan George, Ir.

(57) **Abstract**

An integrated car and entertainment dubbing system for listening, interacting, and dubbing of new musical release, live musical and entertainment awards, internet, internet user's frequency, commercial and distortion free broadcasting, accessory modulation activities, and activities within the view scope of the system's micro and infra red camera using the unique reverse logic dubbing cpu and programmable implementation software to record in nine sequences; the unit's structural components are integrated into a common circuitry to function in a simultaneous listening, viewing, interactive, and dubbing pleasures; the keys or buttons on the face of the unit enable the consumer to select any operation without affecting any dubbing process in progress; the unit's command control, technical support team, in house control and command, and the apparatus are fully integrated into a single unit rather than multiple units.

## Description

### BACKGROUND OF THE INVENTION

### 1. Field of the Invention

The present invention relates to a dubbing system for integration of audio and video data within the system, records and plays from external systems, computer, satellite, cable, radio, and wireless programming using a single or unitary playback and record capability of the Reverse Logic Programming featured in the system's Dubbing Central Processing Unit. The system would record and play audio and video data in analog and or digital signals. Generally, the invention could be manufactured by companies that manufacture electronics, house bold and commercial audio and video equipment.

### 2. Description of the Related Art

This product invention solves many problems not thought of in similar patent category and any other product ever manufactured or being sold in the present market of the industry category. No system before this invention have the unique reverse logic dubbing CPU pertinent to this invention. Also, no other devices have clear technical connectivity and integration of its functional features to a dubbing CPU, memory spaces, and sensor detector. Most dubbing systems before now only record and play from radio and other recording and playback devices (dual dubbing system). The current systems use two recording, and or playback devices to record and playback data. This is time consuming and bulky for today's electronics consumers. Also, prior to disclosing this invention in 1995, no electronic devices have a commercial, distortion, station break, and or interruption free dubbing and listening capability. The present systems can not record live satellite events, and or incorporating wireless programming technology for listening, interacting, and dubbing experience. Other setbacks of current dubbing systems include recording sequence in one or two ways which are tape to disc and disc to tape with human interference that could result in poor quality tape or disc, and bad dubbing experience. They lack audio video conferencing connectivity, consumer choices, user's safety, privacy, convenience, product productivity in terms of application, exchange of disc with personal computers.

Generally, all of the existing electronic devices that record and playback lack auto LCD monitor screen, manual monitor screen, infra camera lens, internet, alarm and alert clock mechanism for the user or motorist safety, fax, keyboard, live musical/entertainment awards sensors, new musical release sensors and detectors, nor do any car audio and video system has a retractable assembly mechanism.

Cost and choice are important factors in purchasing any goods, the current systems do do not provide choice or alternative model if the consumer could not afford the available device. This present product invention have four choices customized to most consumer affordability and provides all of the claimed features and much more. My invention is not just a recording and playback device like other devices currently patented and marketed, but a complete product invention perfection of the next century that would replace the bulky computer, mobilize the workplace, allows for productivity efficiency, privacy, security, and even safety.

The primary reasons of inventing this product are:
To correct and perfect the electronics device; and
To create jobs.

I am one of those Economist who believe in creating jobs by developing an efficient product that solves the problems of an audio/video electronics dubbing system. I envisioned that this product invention would create new jobs, job opportunities, and enhance workers' productivity and efficiency across the workforce -capital and labor markets.

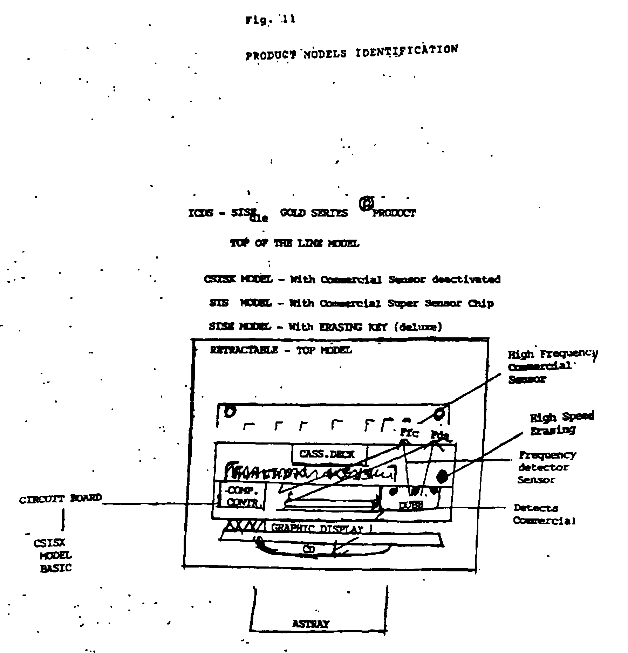

My aim was to identify the problems of current recording systems that are inadequate for today's consumer utility. A consumer's utility from a service or a product would be achieved only at a point of satisfaction. This product invention provides the maximum satisfaction a consumer would wish to derive from a product such as the Integrated Car Dubbing System. As you know the system comes in four models that could be programmed to feature or not feature models identification as shown on Fig. 11.

The top of the line product invention is called the
ICDS-SISEdle GOLD SERIES^{R} PRODUCT which reads:
INTEGRATED CAR DUBBING SYSTEM - SISE deluxe ltd. edition Gold Series registered Product.

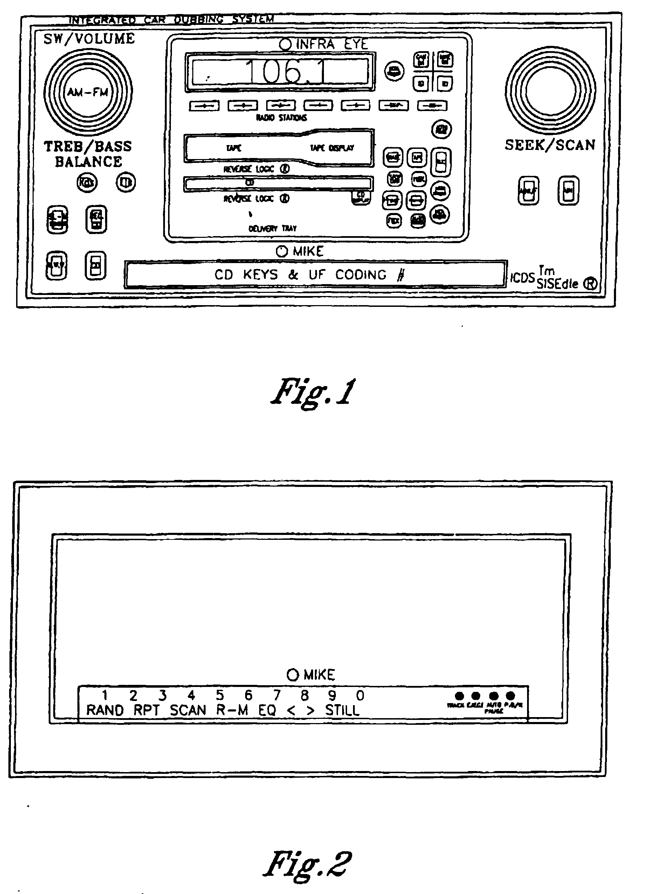

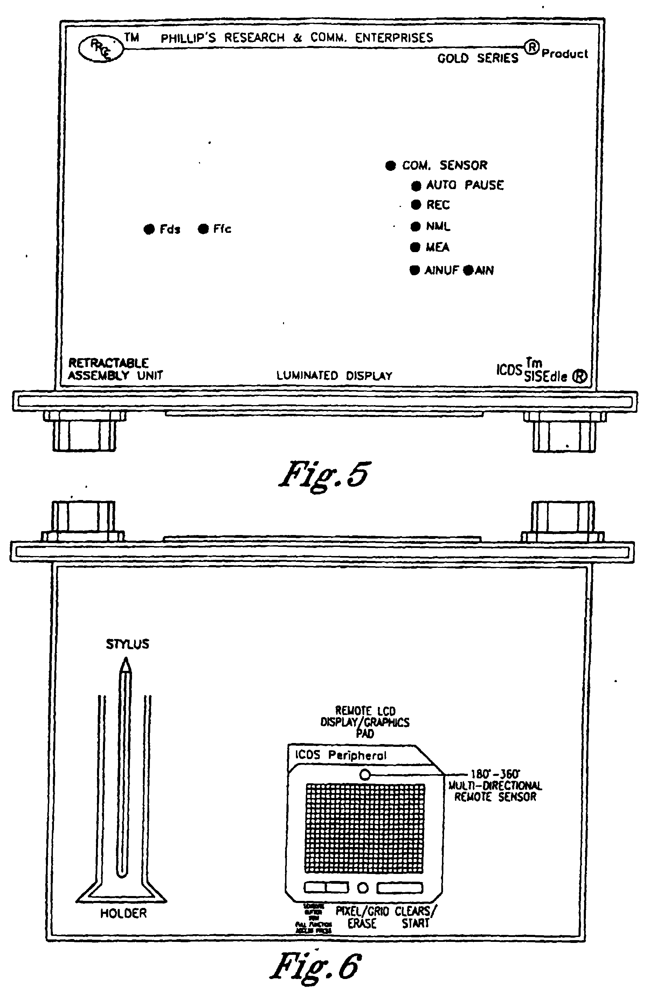

See attached appendix at the end of this specification for illustration of the proposed invention patent and trademark product logo as shown on Figures 1, 5, and appendix which constitute part thereof this specification. The color illustration shown is for the Trademark Office and has no bearing on the utility patent been sought.

Figures 1 - 6 that form the Design Patent thereof has been patented and issued on 07/07/98. U.S. DESIGN PATENT # 395,884

This utility patent application now being sought is the expanded and consolidated explanation and description of the way the invention works, what it does, manufacturing processes, and how the product invention could be used by the consumer.

### BRIEF SUMMARY OF THE INVENTION

In this information summary, I will review the distinctive functional feature components of the product concept and the needs it fulfills. The concept of the Integrated Car Dubbing System as envisioned by me, Phillip Igbinadolor, dba Phillip's Research & Commercial Enterprises is an auto and home entertainment audio/video product with choices of four product models and serial identification that has a unitary playback and record functions of tape and disc deck with a built in reverse logic programmed dubbing central processing unit integrated into the sensors, detectors, motherboard chips, memory type spaces to enable the unit to record in nine dubbing sequences: tape to tape, tape to disc, tape to memory, disc to disc, disc to tape, disc to memory, memory to tape, memory to disc, memory to memory within and between the cassette and disc deck in a single structural component called the Integrated Car Dubbing System or its portable home and commercial entertainment center version.

The system records and plays all features claimed, has an external input port for a personal computer, and allows interchange of disc between existing computer's disc and CD player disc. The play override (P.O/R) button on the AINUF coding panel when push in allows the user to interchange prerecorded discs with the unit or the unit's disc with personal computer of 512K to 32 mega bytes microprocessors and memory space capacity, and any existing CD player disc. The system will fulfill the need for a useful and practicable audio/video dubbing, listening, and interacting package for a motorist and a house hold entertainment center. Other appealing features include the convenience of making a commercial free recording and listening, or interacting when the selection is made by the consumer. The unit starts recording automatically when it senses a new musical release or five musical and entertainment events without interfering with the current selection. The system would record and store analog, and or digital data onto the assigned memory space or the memory space depending on the data signal been read. Video, digital, and fiber optical images are stored onto a disc and a memory type space, while audio data are stored onto a tape and a memory type space. When a blank tape or disc is inserted, the unit records stored data onto the medium automatically. An insertion of a prerecorded data would cause the system to reject and eject the medium -tape or disc.

To record prerecorded data, the consumer push in the record functional button of selected deck and insert the prerecorded medium. The unit reads and store the data onto a memory space or assigned memory space. When a blank tape or disc is inserted, it copies the stored data on the chosen tape or disc. To record activities being engaged in, the consumer would make selection and push in the record button. The consumer do not need to insert a blank tape or disc to record, all recordings are done internally and stored. The user may choose to complete his/her dubbing at a later time. The consumer has choice of erasing old or unwanted data. To perform this activity, the consumer would push in the erase functional button of the selected deck. Prerecorded data on a medium or stored data in a memory type space would be erased if selected.

The user could also pause recording of data when the pause button of the selected deck is activated by pushing in the pause functional button. This product invention has been conceptualized to be safe. The unit's functional design outlook confirms with the Underwriter's Laboratories (UL) standards. The unit requires no new technology or physical materials. It uses electrical wiring, electronic circuitry, computer circuitry, computer motherboard chips, sensors and detectors, microprocessors, satellite, cable, and an application software technology. In fact, companies such as Sony Corporation and Samsung could manufacture the overall electronics, while companies such as Texas Instruments, Comsat, Oracle Corporation, MCI, Bell-Atlantic, Microsoft could design the application software necessary to operate the system. The technology and product development software know how are available, but what has been missing is the insight or ingenuity. Until now, no other car or house hold dubbing system or commercial recording system has offered these hi tech electronics functional features in a single product as does the ICDS-SISE deluxe Gold Series Product, which is the top of the line of the four models been claimed in this patent application.

The manufacturer of the product invention would encompass existing technology, software development know how along with a relatively standard materials and manufacturing processes. In general, tapping the line level audio after the AM/FM detector circuits, including a buffer amplifier with automatic level control (ALC) to maintain a proper recording level and function switch control for the recording source, and recording features that requires no training to use. Conventional printed circuit board or surface mounted printed circuit board assembly techniques could be used. A normal condition of impact resistant materials would be employed, visual tests of text legibility and color harmonious would meet with industry specification and standard.

The after market versions of the system could be packaged in a corrugated cardboard container. The box could be imprinted in one or more colors, including four color process with product name and logo, manufacturer name, and instructions for use and care. A small pamphlet could be inserted in each package detailing instructions for assembly or installation. Styrofoam inserts could be inserted into the package to protect the product. Corrugated cardboard shipping containers would be used to hold a quantity of individual packaged product to facilitate shipment and storage.

### BRIEF DESCRIPTION OF THE DRAWINGS AND FIGURES

Figure 1 is the front plan view of the Integrated Car Dubbing System of the present invention; showing the integral components that are numbered for proper identification as shown on figure 12;
Figure 2 is the front plan view of the CD and AINUF coding/special coding keys of the system; the mike is strategically located above the panel keys to minimize, accessibility problem; the special panel could be used in entering and coding personal computer serial numbers for p.cs identification, personal and customized internet and entertainment surfing; the feature could also be used to set secret passwords and numbers; the numbers and words are read, compiled, and interpreted by the control command into binary codes that allow the unit to have a working process configuration with the AIN and WWW; push in the AINUF before using the internet of the present audio video invention.
Figure 3 is the Auto Screen front plan view of the audio video system; push in the auto screen button on the face of the unit to activate this feature;
Figure 4 is the MANUAL MENU SCREEN front plan view; it serves as a cover over the face of the unit and as a menu driven screen; push in first before using the internet, tele video conferencing, fax, e-mail features of the present invention; it also allows the user to access features on the unit without seeing the complete unit-when the unit is retracted inward;
Figure 5 is the TOP BOARDER front view of the system; this design permanently displays the product's logo and the manufacturer's logo in place of the inventor's logo as shown; the product's logo is part of the specification drawing of the invention;
Figure 6 is the STYLUS and STYLUS HOLDER and the ICDS-PERIPHERAL front plan view of the system: the stylus could be used to draw, write, or make selection on the manual or auto screen, and ICDS remote control: the template like remote control works without directly pointing at the internal remote sensor of the main unit;
Figure 7 is the TECHNICAL CONFIGURATION and CONNECTIVITY plan view of the invention;
Figure 8 is the INTERNAL CONNECTIVITY and INTEGRATION of the functional features of the invention;
Figure 9 is the EXPANDED DRAWING DESCRIPTION of the present invention;
Figure 10 is the technical blue print drawing description of the LOGIC FLOW, CPU, CIRCUITRY, MEMORY, and the SUPER SENSOR CONNECTIVITY and INTEGRATION for the gold series model of the invention;
Figure 11 is the sketch front plan view of the COMPUTER COMMAND CONTROL and optional product models identification-what differentiates one product model from another;
Figure 12 is a clearer drawing of Figure 1 showing numbered and labeled FUNCTIONAL BUTTONS and USE front plan view of the present invention; it allows for easily identification of parts, and or components;
Figure 13 is an expanded drawing of Figure 5 to show the complete numbered parts/components front plan view of the invention;
Figure 14 is the INTERNAL REVERSE LOGIC DUBBING CPU and SEQUENCES in dubbing; it is a unique and special logic command box of the invention;
Figure 15 is a simple illustration of the integration of the DUBBING CPU, COMPUTER COMMAND and CONTROL, and three functional features of the cassette deck;
Figure 16 is the MAIN APPARATUS AND LOGIC FLOW of commands and signals between and among the IN-HOUSE SUPPORT TEAM (control command personnel), TECHNICAL SUPOORT TEAM (chartered hardware personnel) for the satellite and cable broadcast programming;
Figure 17 is the INTEGRATION and COMMAND FLOW of the MEMORY SPACES of the internal configuration;
Figure 18 is a detailed and clear drawing of the FUNCTIONAL PARTS and their USAGE of the present inflation;
Figure 19 is an inside plan view of the FUNCTIONAL KEYS, REVERSE LOGIC COMMANDS, INTERNAL CONNECTIVITY and out side front view of the present invention;
Figure 20 is the ASSIGNED MEMORY TYPE SPACES, INPUT and OUTPUT SOURCES of the present invention;
Figure 21 is the drawing description of the MANUFACTURiNG PROCESSES of the present invention;
Figure 22 is an expanded drawing illustration and connectivity of the WORLD WIDE WEB and FAX features of the present invention;
Figure 23 is an illustrative drawing of the REVERSE LOGIC FLOW, MEMORY SPACE CHIPS, and FUNCTIONAL SENSORS with output connectivity of the memory type spaces and input connectivity from the auto menu function screen as shown on Figure 24 of the present invention;
Figure 24 is the AUTO MONITOR SCREEN with LCD technology that shows features illustrated when selected;
Figure 25 is an expanded illustration of the interactive nature of the screen to the dubbing central processing unit and the tele video parts of the present invention;
Figure 26 is the descriptive drawing of the USE and ACCESSIBILITY of the present invention;
Figure 27 shows how the car electrical switch is grounded to the inner housing structure with an electrical hydraulic mechanism;
Figure 28 is an illustration of the wiring from the functions to the screen using LCD technology.

### DETAILED DESCRIPTION OF THE INVENTION

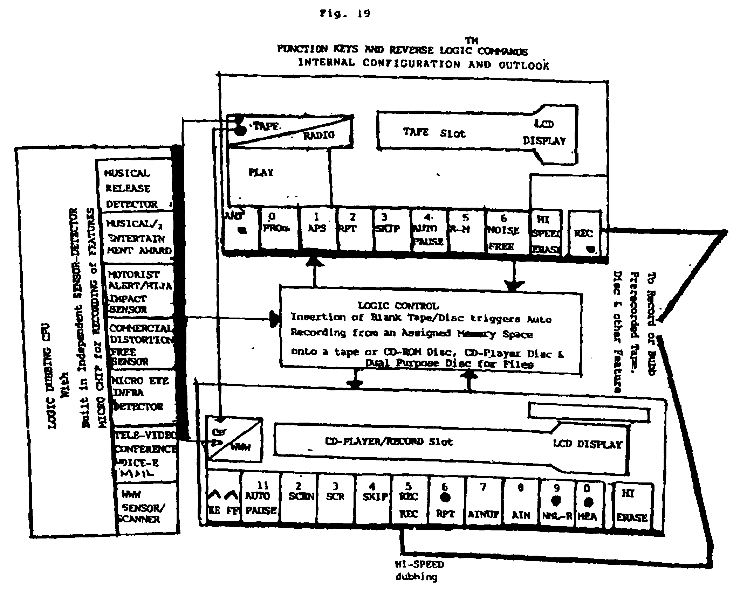

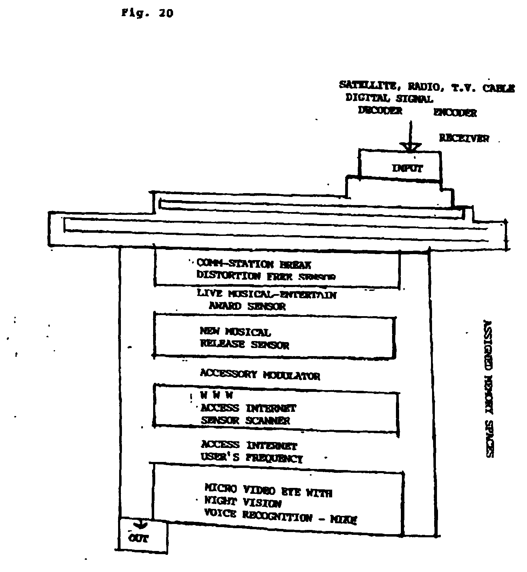

The super sensor detector on board the car's dubbing system constantly scans for satellite, cable, radio, and television broadcasts. The play and record frequency are displayed, so that the user of the product could monitor, stop, and edit library of tape and disc data in the memory, and data in the memory spaces. There are three storage and input sources: memory, cassette, and disc. The sensors detectors also help to eliminate commercial break and noise interruptions. Distortions and interruptions such as noise, frequency fading, commercial messages, and special and paid commercials are eliminated by the com.sensor functional button when activated, there by improving the quality of dubbing, and a better quality of tape and disc. The sensor detector internally scans for new musical releases and awards calendar events and automatically records the music and or shows without the normal interference. In order for the sensor detector to instruct the dubbing cpu to record, it endlessly scans through the databases of researched and stored list, of recording companies, artists, radio frequencies, television and satellite broadcasts, cable and fiber transmissions, bill boards, and recording studios even when the system is turned off. This allows for first time identification and recording of new musical releases in category of the recording companies such as country music and R & B music. The unit also constantly scans record company's new releases, label artists and charts, mode of play and recording; and transfers collected data to the central memory spaces such as ram, rom, sam, and dam memory types. Information, both in analog and digital audio video signals are stored in the central data bank which are filtered to each of the seven sensors of the functional features with memory spaces as shown on Figures 19 and 20.

As a result, any live musical and entertainment awards or new musical releases would trigger the sensor to assign a memory space for the internal dubbing of the feature been triggered.

When a prerecorded tape or disc is inserted into the desired dubbing deck instead of a blank medium the reverse logic dubbing cpu inside the playback and record deck would reject and eject the medium as wrong functional selection. To play a prerecorded tape, and or disc, the record (REC) button of the selected deck or drive should be in an off position. The button or functional key is off when the indicator light is not steady. The programmed (Progr.) functional key on the right side of the unit is a special key and must be in the on position (factory preset) always. Its functions have not thing to do with either deck in terms of play need of a tape or disc as does other patented systems. This key is a symbol of a product built on a programmable concept using the circuit implementation modes and devices in its reverse logic circuitry. The ability of the unit to have already down loaded program software that can also be controlled by personnel on the ground makes it unique. The symbol is displayed as the rest of the functional keys or buttons.

The commercial sensor function (Comm.Sensor) key relays digital/analog messages for the sensor to activate momentarily stop during internal dubbing when it senses distortion or interruption. The auto pause (AP) button when pushed in it would eliminate noise and commercial breaks, distortion, interruption, fading, and station frequency interruptions even in a highly populated areas and tunnels, and poor reception while listening, viewing, and or dubbing. The commercial sensor is integrated and configured with the high frequency commercial sensor (Ffc) button, high frequency dubbing sensor scanner (Fds) button, and the high speed erase (Erase) functional button. The erase function key of both unitary dubbing cpu also allows the user to erase or trash unwanted files and folders of data signals in the memory spaces.

The integrated tape and disc drives or decks would erase tapes and discs, including related memory spaces and prerecorded tapes and discs when selected for a desired functional operation. Dubbing in either of the drive occurs using a Reverse Logic Dubbing Software Application Programming and integrated Circuitry that instructs the used drive to record when a blank tape/disc is inserted into the selected drive. The dubbing application software or the ASIC technology of this product invention would allow the proposed electronics to record in nine sequences based on the integrated sequential circuitry already configured with the dubbing cpu that is further configured into the computer motherboard chip and the microprocessors. The sequential dubbing involves tape to tape, tape to disc, tape to memory, disc to disc, disc to tape, disc to memory, memory to tape, memory to disc, and memory to memory.

The tape to tape, tape to disc, tape to memory, disc to tape, and memory to tape recording involves audio dubbing only. The disc to disc, disc to memory, memory to disc involves audio and video only. Given three memory media (memory, cd deck, and cassette deck) for dubbing, the integrated dubbing cpu would record in nine sequences of audio and video digital/analog signals interchange. The system also records other functional features, including internet activities, financial transactions, audio video conferencing,, and sports/children specials as seen on the monitor screen and the ICDS-peripheral. The system has the input device in form of the interactive screen, ICDS remote peripheral and stylus. An output device in form of the monitor screen and ICDS remote peripheral; and storage device in form of the memory type spaces, and hard copy medium in form of tape and disc; and printouts of e-mail, voice mail, text, and graphics using thermal/photo printing technology of a fax device which is also integrated with Internet and output screen. As a result, the Integrated Car Dubbing System and its home entertainment version is a functional computer within a consumer electronic system. The system is new in the home and car electronics industry; and the added dual purpose audio/video track disc may serve the consumer in time of need.

The service of the internet is global, and the service of a car is also universal. The new product invention brings the versatility of the internet to an electronics audio video system that offers internet plus listening, viewing, interacting, and dubbing pleasures.

The housing of the micro fax machine is under or beneath the deliver tray as shown on Figure 1. It is not visible, but operates like the personal fax machine. The motorist could send and receive messages on the screen as well as a printout with choice of flat or perforated thermal or photo papers. Another distinctive difference between this invention and previous inventions is the uniqueness of the system to integrate current technical know how in electronic technology with relatively new satellite and wireless technology, Gallium Arsenide integrated circuitry (GaAs) technology with transistors/chip, gate delay, transistor gate, fan in and fan out transistor that are fast with low power dissipation and high current driven capabilities compared to electronics with silicon bipolar or unipolar emitter -coupled logic (ECL) families of integrated circuitry. The inventor could only recommend using the GaAs technology as against silicon technology because of the speed and amount of gates per chip. The use of one IC technology in place of another has no bearing on this invention. The purpose is to describe the feasibility of manufacturing and the logic design requirements of the new invention. The user's knowledge of integrated circuitry is irrelevant to using the invention, therefore, the consumer requires no new skills than he or she has in using any electronics, internet or computer. Since this invention has elements of computer in it and of its use, it was invented to replace the bulky computer components of a monitor, cpu, keyboard, and a mouse to a computer in a mobile structure as the car or stationary as in residential and commercial electronics. The built in feature of the infra red video camera is wired and connected to the mike, clock, and the dubbing cpu.. The video eye allows for tele-video conferencing and at the same time monitors the motorist's fatigue using an integrated clock alarm and alert system that is wired into the dubbing cpu. The location of the mike, clock, and camera lens enhance the position of the MIKE/CAM buttons as shown on Figure 1 of the present invention. The buttons have alternate switches in order to sense and capture impacts and unwarranted intruder during a car hijack and an accident impact. As a result, the new system acts as a motorist black box which can be reviewed by the authorities and may help reduce insurance cost. It is of the inventor's belief that when successfully tested and marketed, the consumer would appreciate the product's security, privacy, motorist's safety, and the functional features of this complete and perfected product invention.

Figure 2 is the special cd and access Internet user's frequency coding panel: The functions of the panel is to provide easily access to the cd deck which has numbers 1,2,3,4,5,6,7,8,9,0 for looping numeric coding and identification of disc. The RAND, RPT, SCAN R-M, EQ. 〈〉,and STIL are cd functional keys. To activate any feature, the consumer would push the selected displayed and abbreviated word. The still button allows for steadiness of the video received and or transmitted. It also serves to still picture, text, and or activity been watched. By so doing, the consumer could print out a specific element on the screen rather than an entire text, picture, and activity. The still feature could also freeze selected disc track, and memory space for editing and customized activity. In addition, the panel has an integrated disc track button, an eject. auto pause, and play override buttons (P.O/R)

The consumer could push in the P.O/R button first before playing any disc such as current CD player disc and CD ROM disc that are foreign to the system. Activating the P.O/R button allows consumer to play and record conventional discs. The AINUF button on the special panel is to be activated (push in), in order for the consumer to customized and personalized web and entertainment surfing. Using the AINUF key allows the consumer to, integrate his or her personal computer and computer disc. It is not necessary to activate this functional button during normal internet or www activities, but should be activated when the consumer wants to perform personal financial transactions such as on line banking and trading in the stock exchange markets. In general, the special panel as shown on Figure 2 is used to code p.c. numbers, identification, interchange of current disc with the present invention, also for setting secret pass words and numeric codes, and personalized entertainment and internet surfing. An entry using this panel is read by the integrated control command in binary digits and interpreted by a compiler in the circuitry that reads different programming and machine or assembly languages.

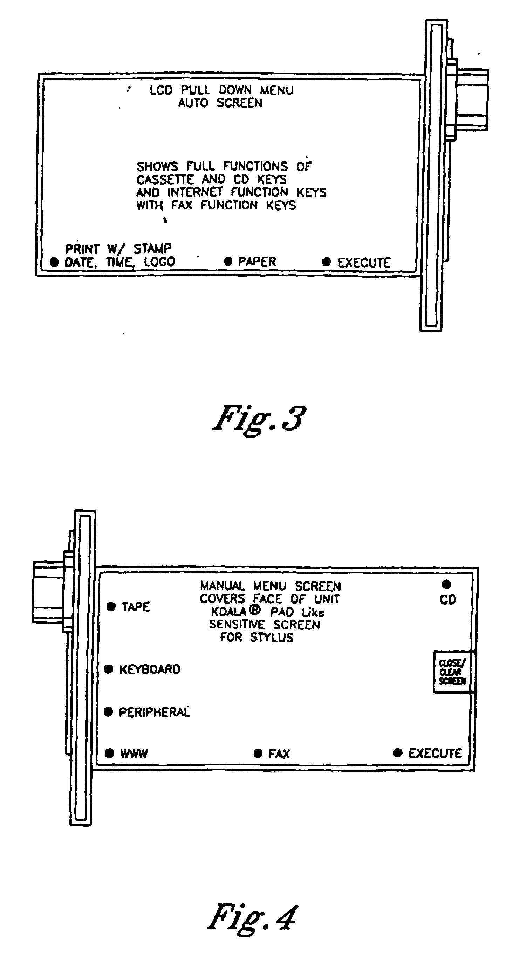

Figure 3 is the auto monitor screen (Auto Screen) that shows full functions of the cassette and CD decks, faded keyboard, calculator, and computer programs and documents. This feature should be activated before logging into the www and internet by pushing in the www and internet buttons. The pull down menu serves as an LCD monitor (output) device. Text, drawings, and single character can be cleared while on the world wide web mode. Figure 4 is the manual menu screen with permanently displayed functions which could be accessed by a human soft touch or by the ICDS peripheral stylus. The close and clear screen display allows the consumer to erase or exit activity from internet and www.

To terminate www and the internet, the user simply push in the functional buttons as shown on Figure 1. The manual menu driven screen also serves as a cover over the face of the unit. Some features could be activated on this screen such as the tele video conferencing. It allows the user to access the displayed features from the unit without seeing the complete component-when the unit is in the retract mode or position. This feature comes with hedge (flat surface screen) or retractable concave shaped screen that slides into the groove between the unit and the top boarder frame. Figure 5 mainly displays the product's and manufacturer's logos, and a retractable assembly unit indication of the product's top of the line model. The unit display of retractable assembly unit means one of the four claimed models as shown on Figure 5 of the present invention. The functional features as shown is for illustrative purpose only.

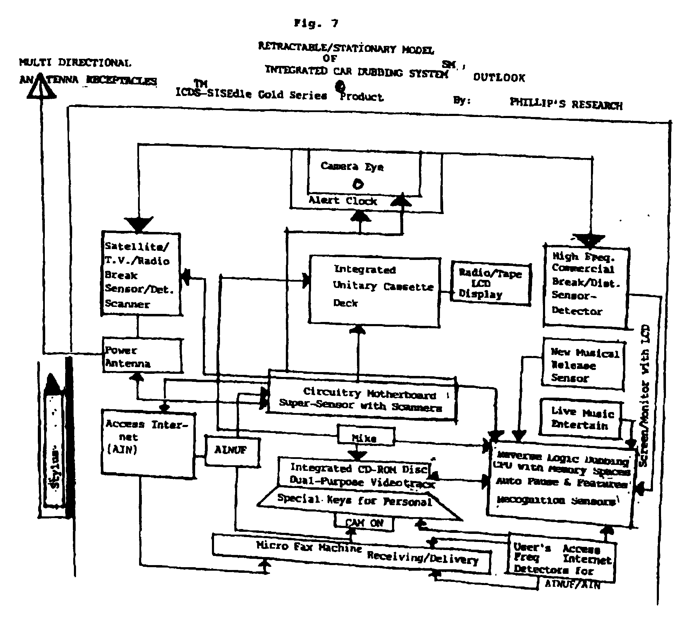

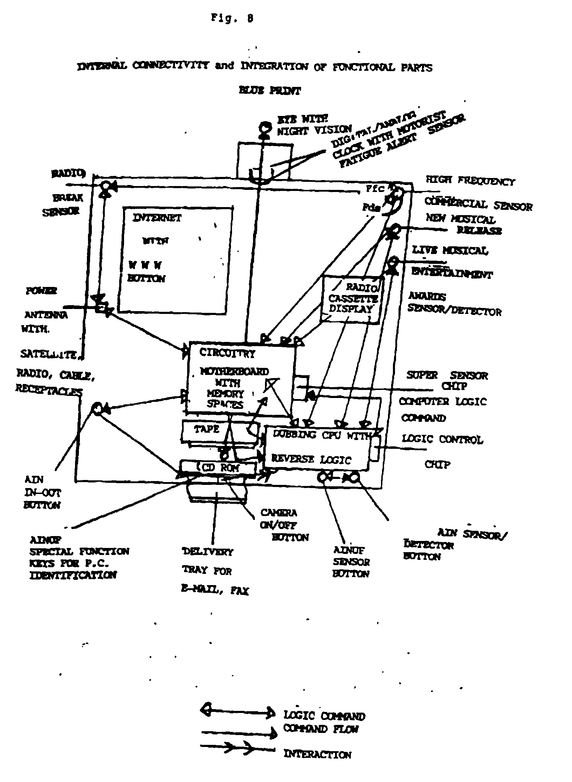

These features are faded permanent displays in order to access them when the auto screen is not been used or unit in a retract position. The stylus can only be used to activate the displayed features, and not human soft touch. Figure 6 is the stylus and stylus holder, and the integrated car dubbing system (ICDS) peripherals. The stylus can be used to draw, write, or select functions on the manual and auto screen. The ICDS-peripheral remote control is a "Koala" like or template like remote control that works without directly pointing at the unit's internal remote sensor. The remote control has a multi directional sensor eye for convince operation of the unit. The sensor works in an angle of 180 - 360 degrees. The consumer would press the right hand bar button to start and clear text, drawing, and activities on the high resolution grid. The consumer presses once to start and double click to clear entire activity. The round middle button erases individual characters displayed on the LCD surface grid of the peripheral, consumer uses the stylus to highlight what to be deleted and press erase to clear. The two in one sensor button with full access press is designed to access all functions claimed in this specification. Continuous tapping/pressing of the left side button would display functions. When the desired function appears, the consumer would press the right side button to activate the desired functional feature. The first six figures are tangible components and constitute the Design Patent aspect of this Utility Patent Specification. Figures seven through twenty eight are the expanded illustration of the system's outlook and internal components that explain the way the system works, what it does, its manufacturing processes, and uses by the consumer. Figure 7 is the technical configuration and integration of the functional features. It shows how the logic gates use the motherboard circuitry and other circuits, and the reverse logic cpu to perform what the inventor claims to do. The Logic Arrays as shown on figure 7 illustrates the input and output connectivity, configuration and integration of the components or parts. Figure 8 shows the internal connectivity and integration of the features claimed into the programming circuitry (IC) and the reverse logic dubbing cpu-application specific programmed device or programming circuitry (ASIC). The electronic circuitry has the feature chips interconnected using the logic configuration pins that are fed into the motherboard circuitry, then memory type spaces for filtering into the dubbing cpu with logic control chip.

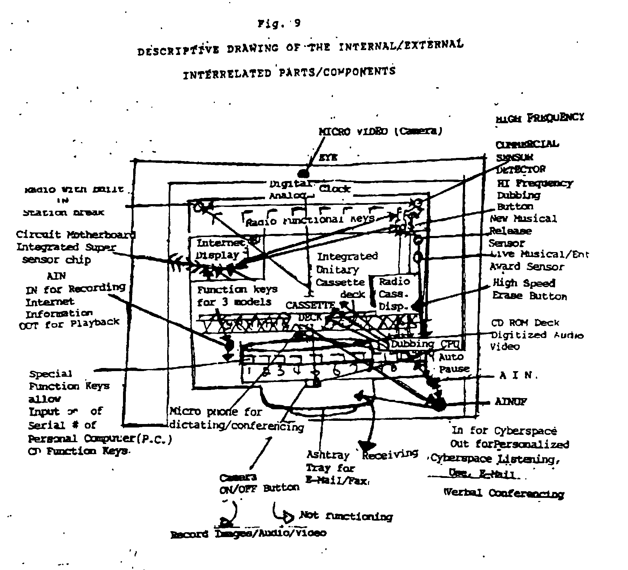

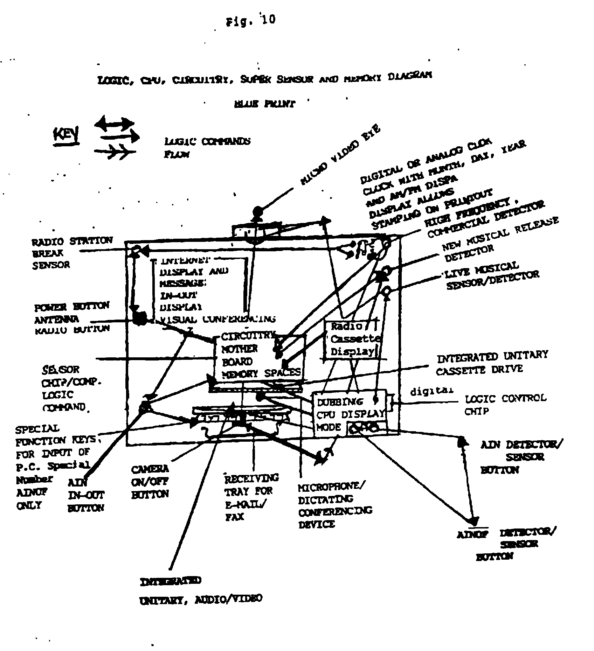

Figure 9 is an expanded technical drawing description of the way the unit works on a configured and integrated circuitry. It also shows the internal wiring and external functionality of the integrated car dubbing system. Figure 10 is the logic, central processing unit, circuitry, super sensor, and memory configuration of the manufacturing processes using circuit structure of the programmed logic arrays (PLAs) and the programmed array logic (PAL) that enable the circuit structure to use AND-OR, and NAND gates fabricated on the application specific integrated circuitry (ASIC) and the dubbing circuitry.

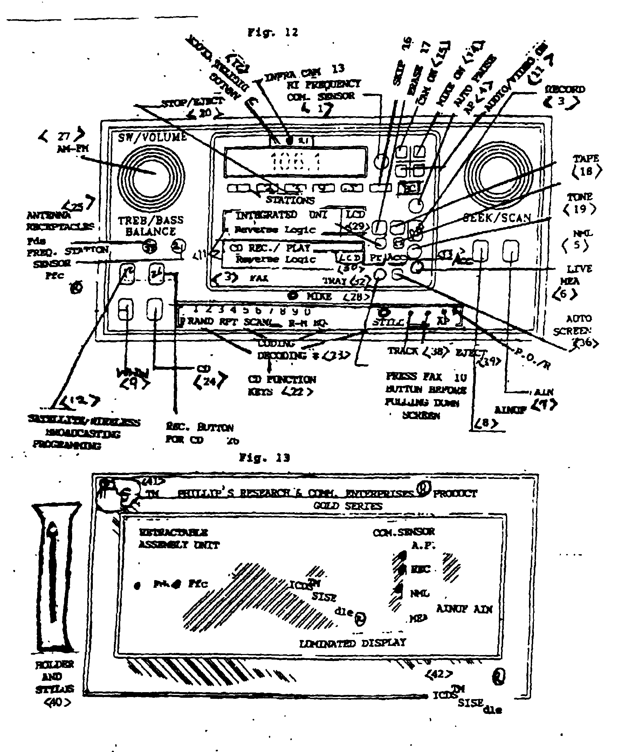

Figure 11 is an illustrative page drawing description of the other three models in order to differentiate one model from another. The ICDS is to be manufactured to be consistent with the claimed functional features that could be programmed to work or not work depending on the model being purchased by the consumer. Figure 12 is a clearer hand drawing of Figure 1 showing the location of each functional button. These functional buttons are been numbered and labeled on the drawing page in order to identify the position of each function as a numbered parts or components for manufacturing purpose.

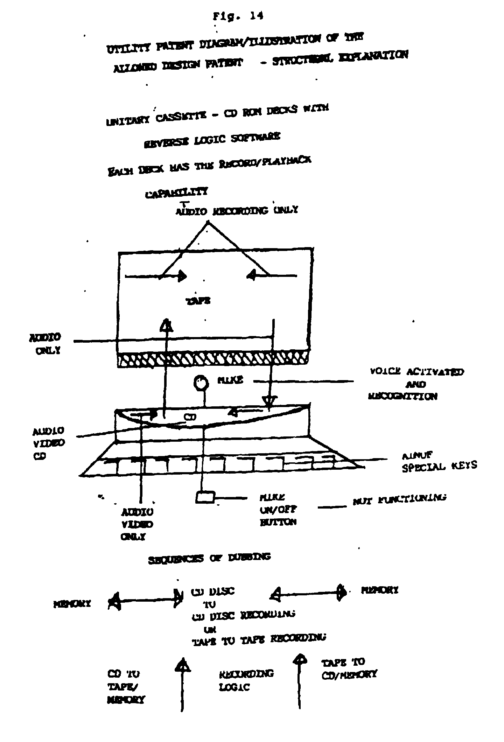

Figure 13 is the expanded drawing of Figure 5 to show the complete numbered parts on the face of the unit. Figure 14 is the internal reverse logic dubbing cpu and sequences in dubbing. With the aid of the ASIC and the reverse logic programmed dubbing cpu. The unit's ASIC instructs the selected deck to record selected tape or disc. When a prerecorded tape or disc is inserted into the selected deck, it plays, record, and store read data information onto the internally selected memory type space.

Prerecorded data information are stored in the memory type spaces, while automatic or triggered recording of data information are stored in the assigned memory type spaces waiting for a blank tape or disc to be inserted, If the REC button is on, the deck will reject and eject the prerecorded medium as an error in selection. The record button blinks to indicate internal and automatic recording triggered by a new musical release or a musical and entertainment award show being broadcast without interfering with the currently selected function or mode.

A simultaneous recording could occur when a prerecorded tape or disc is inserted by the user in order to record while still listening to radio stations or tele video conferencing. The deck would play and store data waiting for a blank medium to be inserted at a later time. To listen to prerecorded tape or disc, the consumer would push out (second push) the record button of the selected deck. A steady light indicator means the deck is recording external medium such as radio and inserted tape or disc.

When recording is completed the indicator light goes off.

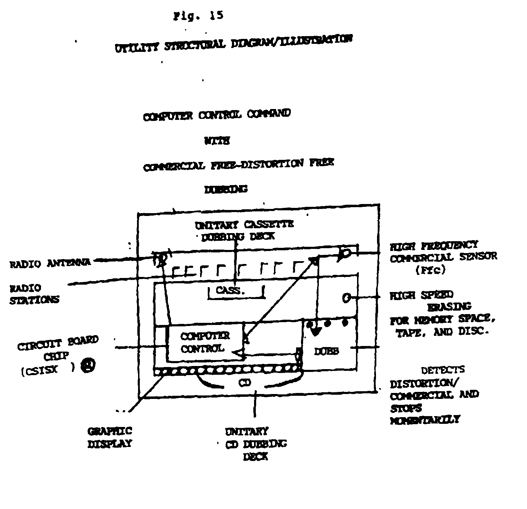

Figure 15 shows a simple illustration of the integration of the dubbing cpu, compiler command control chip, and three functional features that allow the system to record without interruption, distortion or commercial break, thereby resulting in a better tape-disc quality and harmonious dubbing experience by the consumer.

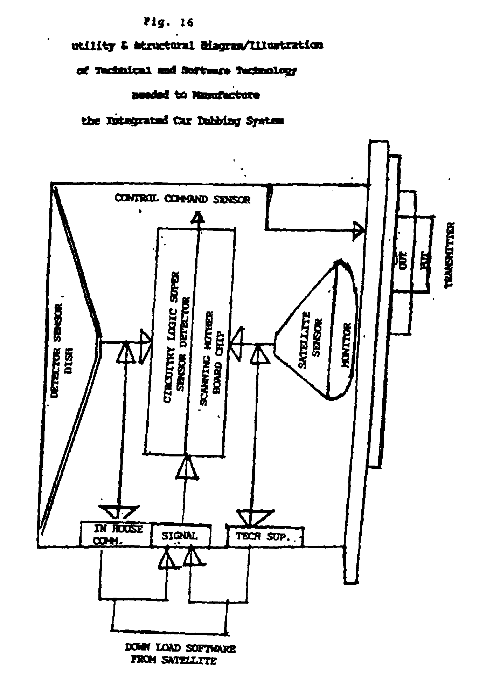

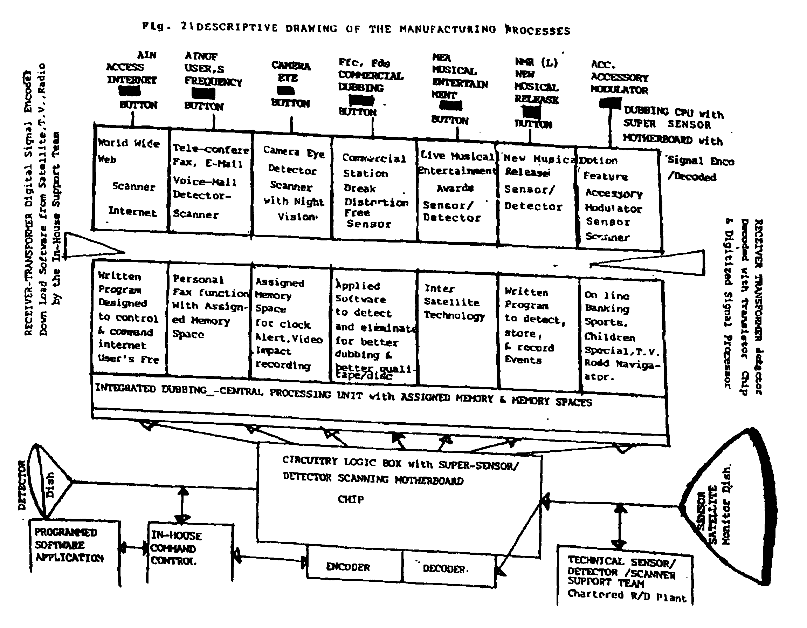

Figure 16 shows the main apparatus, logic flow of command and signals between and among the In-house support team (writes the application software on the ICs) that is down loaded onto the unit's IC and the dubbing circuit structure to function as command control for the wireless broadcast programming, the Technical support team who installs and maintains satellite, cable, and fiber connectivity of the encoding and decoding dishes is also of the pound personnel. The system need not have a standby support teams to function. On the other hand, the system could be controlled by ground personnel as shown on Figures 16 and 21 to operate by subscribing to any of the four models, or simply controlling the functions of the system as a programming service establishment or entity for satellite, cable, and wireless broadcasting to consumers by means of an electronics product.

Satellite programming functions is activated when the satellite-wireless (SL-W) button is in off position. Inward indicates wireless programming being used by the consumer.

Signals from the sensor detector satellite dish are relayed to the motherboard chip, which in turn, are transmitted to the unit's ASIC that reads and distribute information to the configured pins which are integrated into the dubbing cpu. Encoded and decoded signals in the sequential circuitry allows the unit to record in nine sequences.

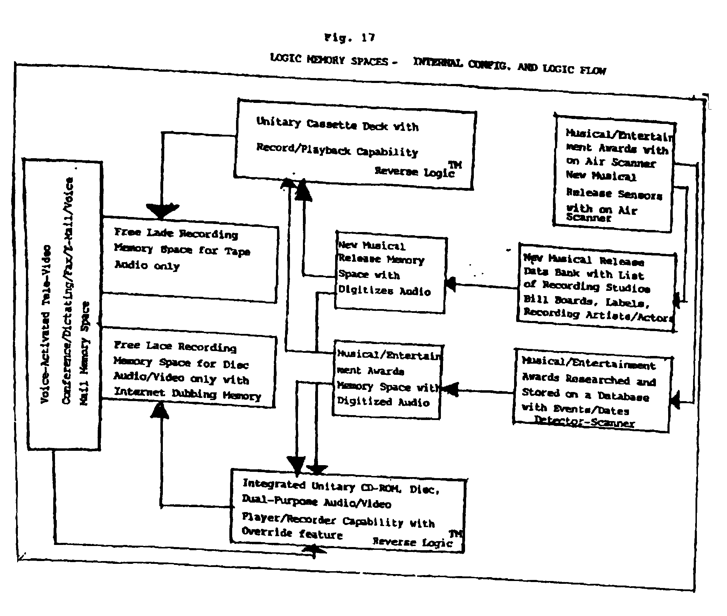

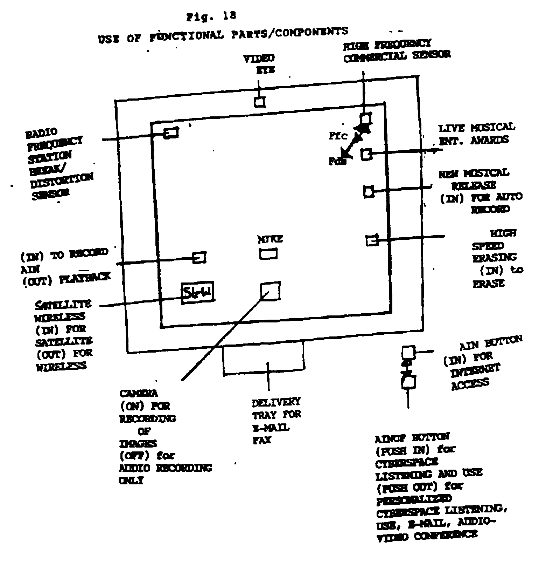

Figure 17 shows the integration of what the unit does, how memory spaces are configured, flow of logic, and internal operation of the system. The use by a consumer of this invention is shown on Figure 18 that details the functionality of components as claimed. Since these functions are physically visible and the consumer could interact and have full control of its operational use, it is not surprising to note the uses and practicality at first sight of Figures 1 and 18.

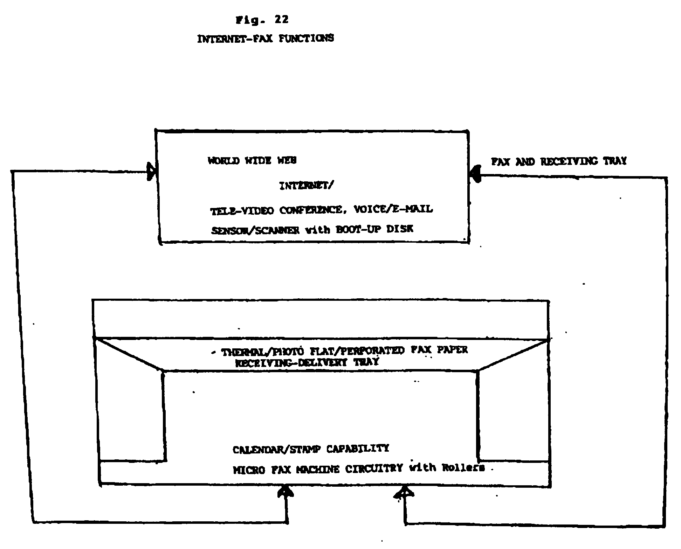

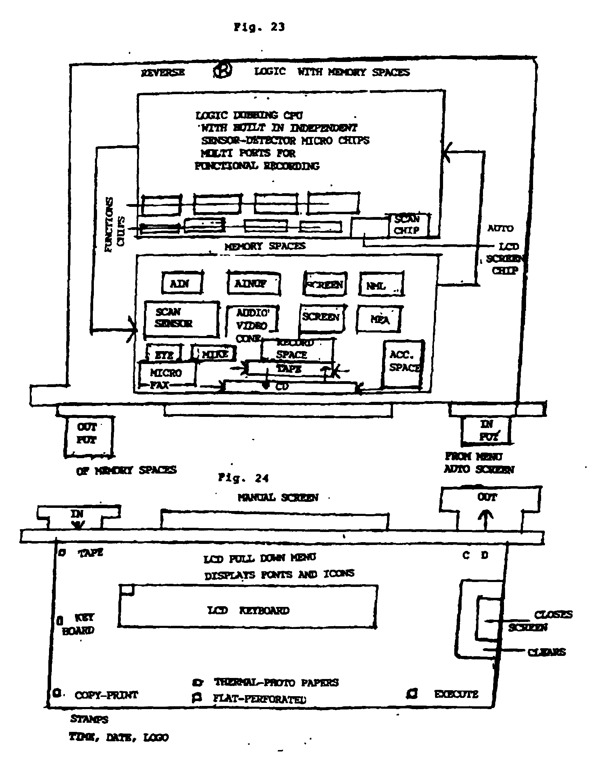

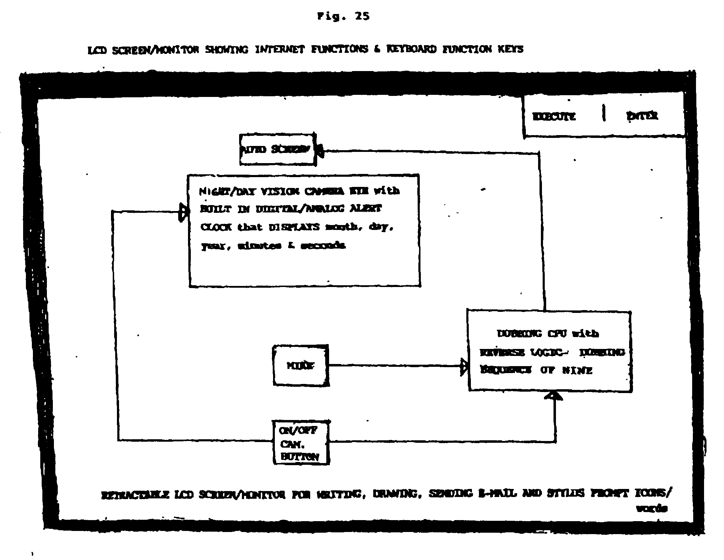

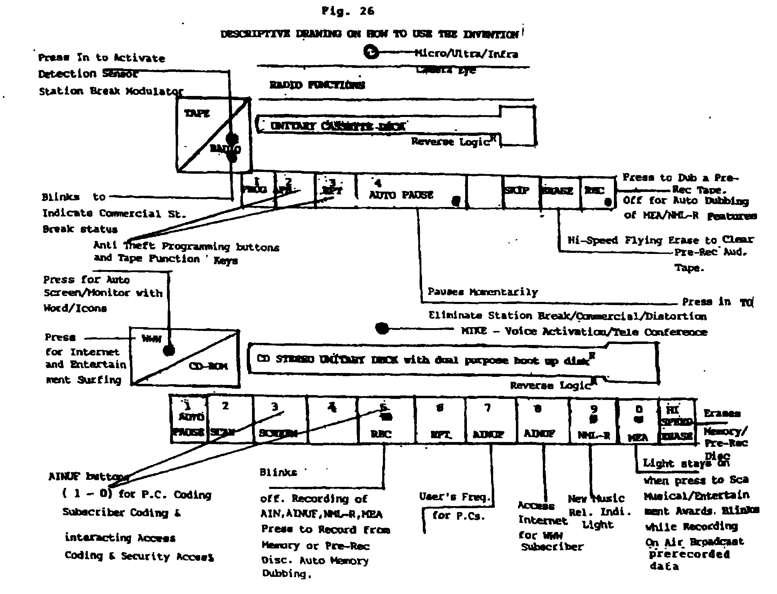

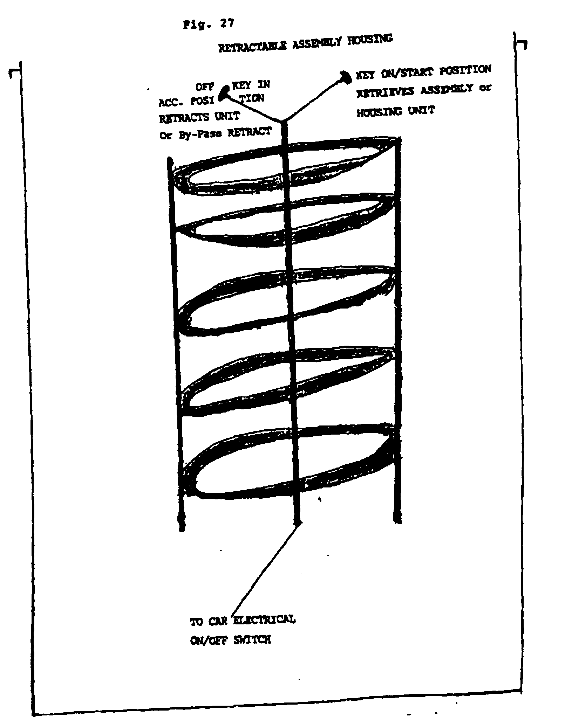

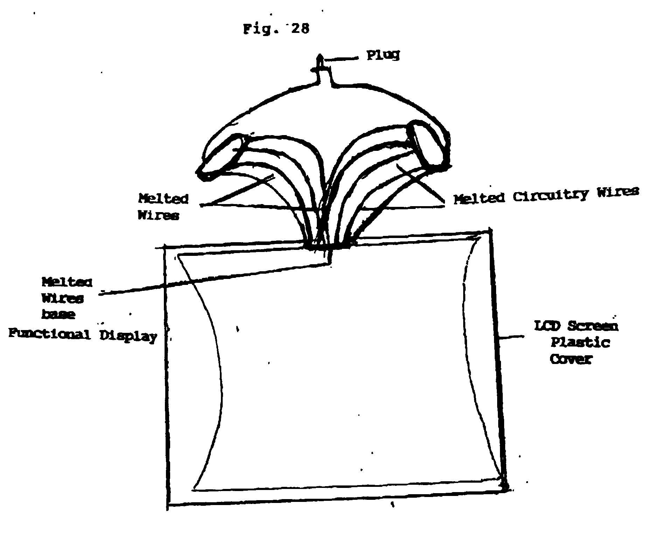

Figure 19 is the inside view of the functional keys, reverse logic commands, and internal connectivity while Figure 20 shows the memory type spaces, input and output sources of the new invention. Figure 21 is the drawing description of the manufacturing processes and Figure 22 is an illustration of the connectivity of the world wide web and the fax features. Figure 23 is the integration of the memory chips, functional sensors and reverse logic flow to the auto menu screen as shown on Figure 24. Figure 24 is the auto monitor screen with an LCD technology that shows features illustrated when selected. Figure 25 is an expanded illustration of the interactive nature of the screen to the dubbing cpu and the tele-video parts of the unit. Figure 26 is a descriptive drawing of the use and accessibility of the functional features of the new product invention as envisioned by me. Figure 27 shows how the car electrical switch is grounded to the inner assembly house of the system using electrical hydraulic know how that allows the unit to stand on a stool with springs and hydraulic mechanism that raises the unit into slot. Figure 28 is an illustration of how the connecting wires to the LCD screen is melted to displayed functions

## Claims

1. Satellite and Wireless (sl-w) sensors/detectors scanners, electrical/electronic circuitry, logic processors, microprocessors, integrated circuitry, motherboard chip, logic sequential circuitry, reverse logic circuitry, and a dubbing central processing unit that receive and transmit analog, and or digital signals from the seven functional components, and
an optional input port (NAND gate) as illustrated on Figures 1,8, 20, and 21 respectively; and

2. A reverse logic dubbing cpu that instructs each unitary deck to record, store, and playback data signals of any selections as shown on Figure 9; and
a programming logic and customized circuit implementation product software that uses Gate arrays, NAND (the accessory modulator) AND-OR circuitry to achieve the product's Application Specific IC (ASIC) -integrated circuit dubbing cpu that records in nine sequences as shown on Figure 14; and
a dual purpose audio video track disc for formatting, external storage, and backup in case of a system failure or malfunction due to damage; and

3. A commercial free/distortion free (com.sensor) sensor-detector that recognizes and suppresses high frequency interruption by constantly scanning programmed broadcasting frequency modes (fdc) sensor and synthesized by eliminating the distortion in a highly populated area, poor reception due to topographic condition, tunnel, microwave, and or electrical interference resulting in a perfect listening and dubbing pleasure; see Figure 15 for illustration; and
a high speed memory, record and playback erase sensor/detector that reads ram, rom, ram, cam/am, sam, and dam types of memory data as shown on Figure 17; and

4. A live musical/entertainment awards (mea) sensor detector that receives analog, and or digital signals from broadcastings such as radio, television, satellite, and cable using the special multi directional power antenna receptacles as shown on Figure 7; and
a download signal data to the system's motherboard chip which in turn transmits to the integrated dubbing cpu and memory spaces that enable the consumer to record, play, see, and interact with similar component when the desired selection is activated as shown on Figures 1, 7, 8, 9, 10, 12, 16, 19, and 21; and
a new musical release (nmr-l) sensor detector that receives and instructs the dubbing cpu to record and store data signals onto the memory space as determined by the logic circuitry; and

5. An access internet (ain), access internet user's frequency (ainuf) sensor detector pins that are configured with the www, sl-w, cam, mike, fax, screen, icds-peripheral, and integrated into the programmed circuitry and dubbing cpu; and

6. An integrated digital/analog clock alarm alert sensor detector that emits preset factory edible sound or user's choice of sound and volume control that would alert the motorist when the camera eye senses motorist fatigue and impact in case of an accident or car hijack which is activated manually as shown on Figures 8, 10, 12, 14, and 18; and
an impact resistant unit that serves as a black box for the motorist or consumer, since any activity inside the car or facing the component could be recorded and stored for later use or analysis by the authority; and

7. A retractable assembly comportent against vandalism and theft when the ignition switch of the car is in the off position, and the retraction could be by passed when the key is in the accessory position; and a start position would retrieve the housing or assembly unit back into the car's electronic slot; and wires that are connected to the car electrical configuration as shown on Figure 27; and

8. An icds product models' logo and the manufacturer's logo in place of the phillip's research and commercial enterprises' logo as shown on Figures 1, 5, and 7; and
an icds peripherals specially designed to enhance creativity and efficiency for the motorist's executive, and or motorist's family, and
a four product models thereof: ICDS-SISEdle GOLD SERIES PRODUCT; ICDS-SISEdl; ICDS-SIS; ICDS-CSISX; and
a portable residential/commercial dubbing entertainment center version of the new product invention.
